# EUROPÄISCHE PATENTSCHRIFT

(11) **EP 3 061 675 B1**
(45) Veröffentlichungstag und Bekanntmachung des Hinweises auf die Patenterteilung: **21.03.2018**
(21) Anmeldenummer: 16150556.5
(22) Anmeldetag: 08.01.2016
(51) Int. Cl.: B62D 25/24

(54) **DICHTSTOPFEN, BAUGRUPPE UND VERFAHREN ZUM ABDICHTEN EINER ÖFFNUNG**
SEALING STOPPER, ASSEMBLY AND METHOD FOR SEALING AN OPENING
BOUCHON ETANCHE, COMPOSANT ET PROCEDE DESTINES A ETANCHEIFIER UNE OUVERTURE

(30) Priorität: 24.02.2015 FR 1551554
(43) Veröffentlichungstag der Anmeldung: 31.08.2016
(73) Patentinhaber: Illinois Tool Works Inc., Glenview, IL 60025 (US)
(72) Erfinder: Kuhm, Michel, 67340 Ingwiller (FR); Dorschner, Stephane, 67340 Weiterswiller (FR)
(74) Vertreter: Hauck Patentanwaltspartnerschaft mbB

(56) Entgegenhaltungen:
- DE-A1- 19 546 160
- DE-T2- 60 204 131
- US-A1- 2004 091 335

## Beschreibung

Die Erfindung betrifft einen Dichtstopfen zum Verschließen einer Öffnung in einem Bauteil, insbesondere einem Karosseriebauteil eines Kraftfahrzeugs. Außerdem betrifft die Erfindung eine Baugruppe mit einem solchen Dichtstopfen sowie ein Verfahren zum Abdichten einer Öffnung.

Bei der Herstellung von Fahrzeugkarosserien ist es erforderlich, Öffnungen in diversen Karosseriebauteilen abzudichten, um das Eindringen von Schmutz oder Wasser zu verhindern. Diese Öffnungen werden beispielsweise erst verschlossen, wenn das jeweilige Karosseriebauteil während des Lackiervorgangs zum Schmelzen und Aushärten des aufgebrachten Lacks in einen Heizofen überführt wird.

Hierzu werden Verschlussstopfen verwendet, die in die Öffnung des Karosseriebauteils eingesetzt werden und die beispielsweise mittels geeigneter Rastelemente, die in die Öffnung des Bauteils eingreifen, fixiert werden. Der Verschlussstopfen kann gleichzeitig eine Abdichtung der Öffnung bewirken, wobei z.B. bekannt ist, zumindest einen Abschnitt des Dichtstopfens mit dem Rand der Öffnung permanent zu verkleben. Beispielsweise ist ein Abschnitt des Dichtstopfens aus einem bei Temperatureinwirkung schmelzenden oder expandierenden Material gefertigt, sodass bei einem Erhitzen des Bauteils, z.B. beim Lackieren, der Dichtstopfen stoffschlüssig mit dem Rand der Öffnung verbunden wird. So wird die Öffnung wasserdicht versiegelt und gleichzeitig der Dichtstopfen am Karosserieteil befestigt.

Ein derartiger Dichtstopfen ist beispielsweise in der DE 602 04 131 T2 dargestellt, wobei dort zwei konzentrische Ringe aus schmelzendem Material vorgesehen sind, die durch mehrere Rippen miteinander verbunden sind, wobei der radial äußere Ring neben dem Rand der Öffnung aufliegt und der radial innere Ring am Innenrand der Öffnung anliegt.

Aus US2004/0091335A1 ist ein Lochstopfen bekannt mit einem Kopfabschnitt und einem sich von dem Kopfabschnitt erstreckenden Halsabschnitt, an dem mehrere Führungsabschnitte vorgesehen sind, die das Einsetzen des Stopfens in ein Loch erleichtern sollen.

Weiterhin ist aus DE 195 46 160 A1 ein Verschlussdeckel bekannt mit einem napfartig ausgebildeten Deckelteil, bestehend aus einer Kernkomponente aus einem harten Material und einem mit dem Deckelteil verbundenen Abdichtteil, bestehend aus einer äußeren Komponente aus einem weicheren Material. Eine Seitenwand des Abdichtteils weist mehrere über den Umfang verteilte Eingriffselemente auf.

Nachteilig bei allen bekannten Konzepten ist es, dass der Dichtstopfen ziemlich exakt an den Durchmesser der Öffnung angepasst sein muss, und so für unterschiedliche Öffnungsdurchmesser eine Vielzahl von Dichtstopfen vorgefertigt und auf Lager gehalten werden muss.

Aufgabe der Erfindung ist es, einen Dichtstopfen zu schaffen, der für Öffnungen mit unterschiedlichen Durchmessern verwendet werden kann.

Dies wird erfindungsgemäß mit einem Dichtstopfen zum Verschließen einer Öffnung in einem Bauteil, insbesondere einem Karosseriebauteil eines Kraftfahrzeugs, erreicht, der einen Grundkörper aufweist, der so ausgebildet ist, dass er die Öffnung abdecken und einen Rand der Öffnung hintergreifen kann, wobei am Grundkörper ein Dichtkörper angeordnet ist, der einen Ringabschnitt und mehrere vom Ringabschnitt abstehende, in Umfangsrichtung flexible Lamellen mit freien radialen Enden aufweist. Durch ihre Beweglichkeit in Umfangsrichtung können sich die Lamellen mehr oder weniger an den Ringabschnitt anlegen und ermöglichen es so, dass der Dichtkörper in Öffnungen mit unterschiedlichem Durchmesser eingesetzt werden kann, wobei die Lamellen stets am Innenrand der Öffnung anliegen.

Der Durchmesserbereich ist hierbei von der Länge der Lamellen abhängig. Ein minimaler Durchmesser ist dadurch definiert, dass bei eingesetztem Dichtstopfen die Lamellen praktisch vollständig am Ringabschnitt anliegen, während der maximale Durchmesser sich dadurch bestimmt, dass die Lamellen weitmöglichst radial nach außen abstehen.

Die Lamellen sind vorzugsweise elastisch ausgebildet und üben so eine Rückstellkraft in Umfangs- und Radialrichtung aus, was dafür sorgt, dass der Dichtstopfen in der Öffnung klemmt und außerdem eine Zentrierung des Dichtstopfens in der Öffnung bewirkt. Das Material des Dichtkörpers sollte zu diesem Zweck elastisch sein.

Beispielsweise können etwa zehn Lamellen mit einer Länge von etwa 3 - 5 mm vorgesehen sein, was eine Variation des Öffnungsdurchmessers von etwa 5 mm erlaubt, etwa für die Verwendung von Öffnungen zwischen 30 und 35 mm Durchmesser.

Die Lamellen erstrecken sich vorzugsweise in der Ebene des Ringabschnitts, sodass bei in die Öffnung eingesetztem Dichtstopfen auch der Ringabschnitt auf Höhe des Innenrandes der Öffnung liegt. Die Lamellen verlaufen bevorzugt über die gesamte axiale Länge des Ringabschnitts.

In einer bevorzugten Ausführungsform weist der Grundkörper eine umlaufende Stützlippe und eine umlaufende Rastlippe zur Anlage an einer Vorderseite und einer Rückseite des Bauteils auf, wobei der Dichtkörper zwischen der Stützlippe und der Rastlippe aufgenommen ist. Auch die Lamellen sind vorzugsweise vollständig in dem von den Lippen gebildeten Raum aufgenommen und werden durch diese geschützt.

Die Lippen verlaufen beispielsweise schräg und bilden jeweils einen Kegelstumpf.

Die Rastlippe sollte den rückseitigen Rand der Öffnung im montierten Zustand hintergreifen und so ein Verrasten des gesamten Dichtstopfens beim Einsetzen in der gewünschten Position ermöglichen.

Der Grundkörper kann eine umlaufende Umfangswand aufweisen und der Dichtkörper, insbesondere dessen Ringabschnitt, radial außen an der Umfangswand anliegen. Diese Konstruktion ermöglicht eine stabile radiale Abstützung des Dichtkörpers und erzeugt einen ausreichenden Gegendruck, um den Dichtstopfen beim Einsetzen in der Öffnung zu fixieren.

Wenn die Lamellen an ihren freien radialen Enden am rastlippenseitigen axialen Ende abgeschrägt sind, erleichtert diese Abschrägung das Umklappen in Umfangsrichtung beim Einschieben des Dichtstopfens in die Öffnung. Beim Einschieben liegt die Abschrägung am öffnungsseitigen axialen Ende der Lamellen auf der Innenseite der Rastlippe auf. Beim Auftreffen der Rastlippe auf den Innenrand der Öffnung übt die Rastlippe eine schräg nach innen wirkende Kraft auf die Lamellen aus und leitet ein Umklappen der Lamellen in Umfangsrichtung ein. Beim weiteren Einschieben in die Öffnung werden die Lamellen dann durch die elastische Verformung der Rastlippe in Umfangsrichtung umgeklappt. Wenn die Rastlippe in montierter Stellung den Rand der Öffnung hintergreift, strecken sich die Lamellen aufgrund ihrer Eigenelastizität wieder so weit, dass sie am Innenrand der Öffnung anliegen. Hierbei zentrieren sie den Dichtstopfen in der Öffnung. In diesem montierten Zustand liegen die Lamellen direkt am Innenrand der Öffnung an, während die Rastlippe den Rand der Öffnung hintergreift. Dabei muss kein Kontakt mehr zwischen den Lamellen und der Rastlippe bestehen.

In einer möglichen Ausführungsform sind die Lamellen unbelastet in einem Winkel von etwa 10 - 40°, insbesondere in einem Winkel von etwa 30°, zur Radialrichtung ausgerichtet. Es hat sich herausgestellt, dass auf diese Weise ein einfaches Umklappen in Umfangsrichtung erfolgt, da die Lamellen bereits unbelastet in einem Winkel zur Radialrichtung stehen, was beim Einschieben in die Öffnung eine Kraftkomponente in Umfangsrichtung vorgibt.

Der Dichtkörper, inklusive der Lamellen, besteht erfindungsgemäß aus einem bei Wärmeeinwirkung expandierenden Material. Die Menge an expandierendem Dichtmaterial ist vorteilhaft so bemessen, dass bei Wärmeeinwirkung von beispielsweise etwa 120 - 180 °C der Raum zwischen der Stützlippe und der Rastlippe und um den Rand der Öffnung vollständig ausgefüllt wird. Vorzugsweise ist eine ausreichende Menge von Dichtmaterial vorgesehen, um den von der Stützlippe und der Rastlippe umschlossenen Raum auch bei maximal vorgesehenem Öffnungsdurchmesser vollständig auszufüllen. Bei seiner Expansion füllt das Dichtmaterial den Durchmesser der Öffnung von der Umfangswand des Dichtstopfens bis zum Innenrand des Öffnung und bedeckt darüber hinaus auch Abschnitte des Bauteils radial außerhalb der Öffnung sowohl auf der Vorder- als auch auf der Rückseite des Bauteils. Auf diese Weise wird eine umfangsmäßig geschlossene wasserdichte Versiegelung erreicht. Das Expandieren des Dichtkörpers erfolgt beispielsweise beim Aufheizen während des Lackierens.

Der Grundkörper sollte hingegen aus einem elastischen, aber formstabilen Material ausgebildet sein und ist vorzugsweise einstückig geformt. Hier kommt beispielsweise ein halbsteifes Kunststoffmaterial von einer Shore-D-Härte von 30 - 50 infrage, beispielsweise TEE oder TPE oder ein anderes geeignetes thermoplastisches Elastomer.

Der Dichtkörper kann zusammen mit dem Grundkörper in einem Zweikomponenten-Spritzgussverfahren gefertigt sein, um die Herstellung zu vereinfachen.

Die Erfindung betrifft auch eine Baugruppe mit einem erfindungsgemäßen Dichtstopfen zum Verschließen einer Öffnung in einem Bauteil, insbesondere einem Karosseriebauteil eines Kraftfahrzeugs, und einem Bauteil mit einer Öffnung, wobei der Dichtstopfen einen Grundkörper aufweist, der so ausgebildet ist, dass er die Öffnung abdecken und einen Innenrand der Öffnung hintergreifen kann, wobei am Grundkörper ein Dichtkörper angeordnet ist, der ein bei Wärmeeinwirkung expandierendes Material aufweist, wobei nach Erhitzen des Dichtstopfens das bei Wärmeeinwirkung expandierende Material den Innenrand der Öffnung sowie radial anschließende Bereiche einer Vorderseite und einer Rückseite des Bauteils über den gesamten Umfang der Öffnung umschließt.

Der Dichtkörper weist, wie oben beschrieben, nach außen abstehende Lamellen auf. Nach dem Einsetzen des Dichtstopfens in die Öffnung und nachfolgendem Erhitzen füllt das expandierende Dichtmaterial den Raum rings um den Innenrand der Öffnung komplett und möglichst ohne Hohlräume aus und dichtet so die Öffnung ab.

Die Erfindung betrifft außerdem ein Verfahren zum Abdichten einer Öffnung in einem Bauteil. Dabei wird ein oben beschriebener Dichtstopfen, der eine frontseitige Stützlippe sowie eine rückseitige Rastlippe aufweist, in die Öffnung des Bauteils eingeschoben, sodass die rückseitige Rastlippe den Rand der Öffnung hintergreift. Dabei werden die Lamellen des Dichtkörpers in Umfangsrichtung verformt und zentrieren den Dichtstopfen in der Öffnung. Das Bauteil wird erhitzt, wobei sich ein bei Hitzeeinwirkung expandierendes Material des Dichtkörpers ausdehnt und den Innenrand der Öffnung sowie radial anschließende Bereiche der Vorderseite und der Rückseite des Bauteils umschließt sowie den zwischen der Stützlippe, der Rastlippe und dem Bauteil gebildeten Raum vollständig ausfüllt. Die Stützlippe und die Rastlippe halten den Dichtstopfen während des Erhitzens in Position. Vorzugsweise füllt das Dichtmaterial nach dem Erhitzen den Raum zwischen den Lippen vollständig aus, sodass keine Hohlräume innerhalb des von der Stützlippe und der Rastlippe umschlossenen Raums zurückbleiben, was das Korrosionsrisiko senkt.

Nach dem Expandieren des Materials des Dichtkörpers kann die Auszugskraft größer als 400 N sein.

Die Erfindung wird nachfolgend anhand eines Ausführungsbeispiels mit Bezug auf die beigefügten Zeichnungen näher beschrieben. In den Zeichnungen zeigen:
- Figur 1 eine schematische, perspektivische, teilgeschnittene Darstellung eines erfindungsgemäßen Dichtstopfens;
- Figur 2 eine schematische Schnittansicht des Dichtstopfens aus Figur 1 während eines ersten Schritts beim Einsetzen in eine Öffnung in einem Bauteil;
- Figur 3 eine schematische Schnittansicht des Dichtstopfens aus Figur 1 während eines zweiten Schritts beim Einsetzen in die Öffnung;
- Figur 4 den Dichtstopfen aus Figur 1 in einer schematischen Schnittansicht in seiner endgültigen Position eingesetzt in die Öffnung des Bauteils, vor dem Erhitzen;
- Figur 5 eine schematische Schnittansicht des Dichtstopfens aus Figur 1 eingesetzt in ein Bauteil mit einem ersten Öffnungsdurchmesser;
- Figur 6 eine schematische Schnittansicht des Dichtstopfens aus Figur 1 eingesetzt in ein Bauteil mit einem maximalen Öffnungsdurchmesser; und
- Figur 7 eine schematische Schnittansicht des Dichtstopfens, eingesetzt in eine Öffnung, wobei die linke Seite der Figur den Dichtstopfen vor dem Erhitzen und die rechte Seite der Figur den Dichtstopfen nach dem Erhitzen zeigt.

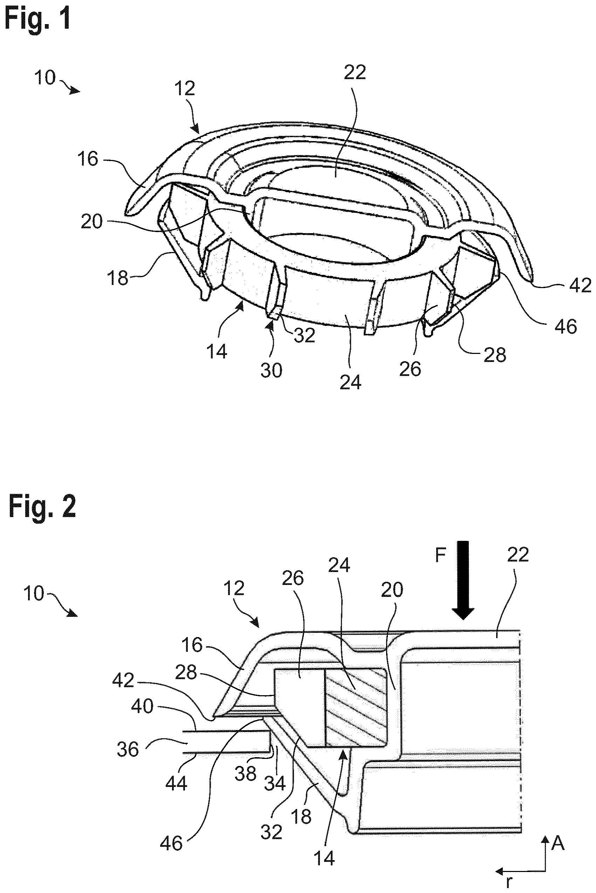

Figur 1 zeigt einen Dichtstopfen 10, der einen Grundkörper 12 und einen am Grundkörper angeordneten Dichtkörper 14 aufweist. In diesem Beispiel besteht der Dichtstopfen 10 aus diesen beiden Komponenten.

Der Grundkörper 12 weist eine umfangsmäßig umlaufende Stützlippe 16 sowie eine umfangsmäßig umlaufende Rastlippe 18 auf, die beide entlang der Radialrichtung r schräg aufeinander zu verlaufen. Die Stützlippe 16 erstreckt sich dabei in Radialrichtung r weiter nach außen als die Rastlippe 18.

Stützlippe 16 und Rastlippe 18 sind über eine Umfangswand 20 einstückig miteinander verbunden.

Die Stützlippe 16 geht einstückig in einen Deckelabschnitt 22 über, sodass die Stützlippe 16 und der Deckelabschnitt 22 zusammen eine geschlossene Fläche bilden.

Der Dichtkörper 14 besteht aus einem umfangsmäßig geschlossenen Ringabschnitt 24 und mehreren, nach außen vom Ringabschnitt 24 abstehenden Lamellen 26 mit freien radialen Enden 28. Die Lamellen 26 erstrecken sich hier über die gesamte axiale Höhe des Ringabschnitts 24. Die Lamellen 26 sind einstückig mit dem Ringabschnitt 24 geformt. In diesem Beispiel sind 10 Lamellen über den Umfang des Ringabschnitts 24 verteilt, die Zahl der Lamellen 26 kann jedoch im Ermessen des Fachmanns variiert werden.

Die Lamellen 26 erstrecken sich nicht exakt in Radialrichtung r vom Ringabschnitt 24 weg, sondern sind in einem Winkel von etwa 30° gegenüber der Radialrichtung r geneigt (siehe z.B. Figur 1).

Der Ringabschnitt 24 ist radial außerhalb anliegend an die Umfangswand 20 des Grundkörpers angeordnet.

Bei der hier gezeigten Ausführungsform ist der gesamte Dichtstopfen 10 einstückig in einem Zweikomponenten-Spritzgussverfahren hergestellt.

Als Material für den Grundkörper wird in diesem Beispiel ein halbsteifes, formstabiles, aber elastisches Material verwendet, beispielsweise ein TEE oder ein TPE (unter dem Handelsnamen Arnitel® erhältlich) oder ein anderes geeignetes thermoplastisches Elastomer, insbesondere mit einer Shore-D-Härte von 30 - 50.

Der Dichtkörper 14 besteht hier jedoch aus einem bei Wärmeeinwirkung expandierenden Material, wobei jedes bekannte, geeignete Material, das bei einer Temperatur zwischen etwa 120 - 180 °C sein Volumen vergrößert, verwendet werden kann.

An ihrem zur Stützlippe 18 weisenden axialen Ende 30 haben sämtliche Lamellen 26 eine Abschrägung 32. Der Winkel der Abschrägung 32 ist in etwa so groß gewählt wie der Winkel, in dem die Rastlippe 18 in entspanntem Zustand zur Axialrichtung A ausgerichtet ist (siehe beispielsweise Figuren 1 und 2).

Figuren 2 bis 4 zeigen das Einsetzen des Dichtstopfens 10 in eine Öffnung 34 eines Bauteils 36 bei normaler Raumtemperatur vor dem Erhitzen des Dichtstopfens 10.

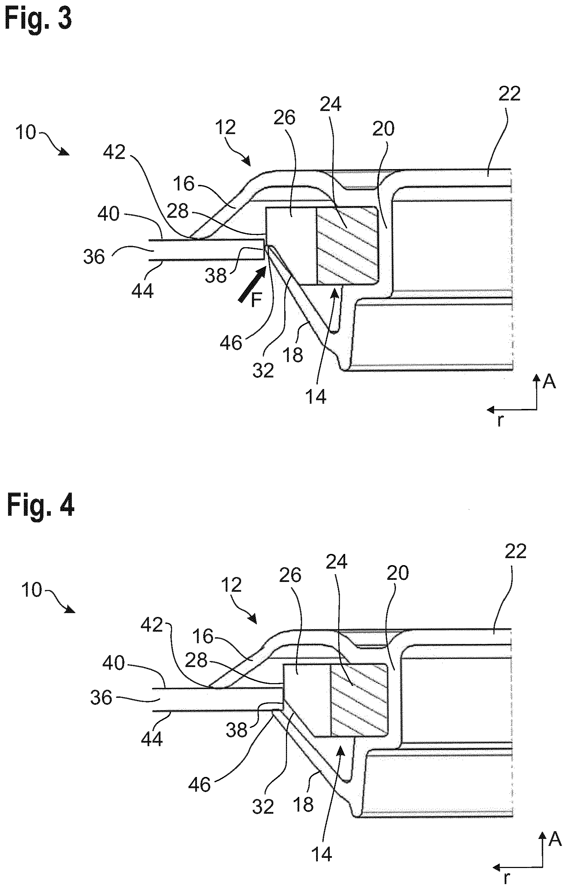

Der Dichtstopfen 10 wird mit der Rastlippe 18 voran in die Öffnung 34 eingeschoben (siehe Figur 2), wobei die Rastlippe 18 zunächst in Anlage an den Innenrand 38 der Öffnung 34 gelangt. Die Rastlippe 18 wird hierdurch radial nach innen verformt, während sie durch die Öffnung 34 hindurchgeschoben wird. Infolgedessen gelangt, wie in Figur 3 zu erkennen ist, die Rastlippe 18 in Anlage an die Abschrägung 32 der Lamellen 26.

Aufgrund des bereits bestehenden Winkels α zur Radialrichtung r wird bei Krafteinwirkung in Axialrichtung A die jeweilige Lamelle 26 in Umfangsrichtung U umgeklappt, wodurch sich der effektive Durchmesser des Dichtkörpers 14 verringert und an den Durchmesser d der Öffnung 34 anpasst.

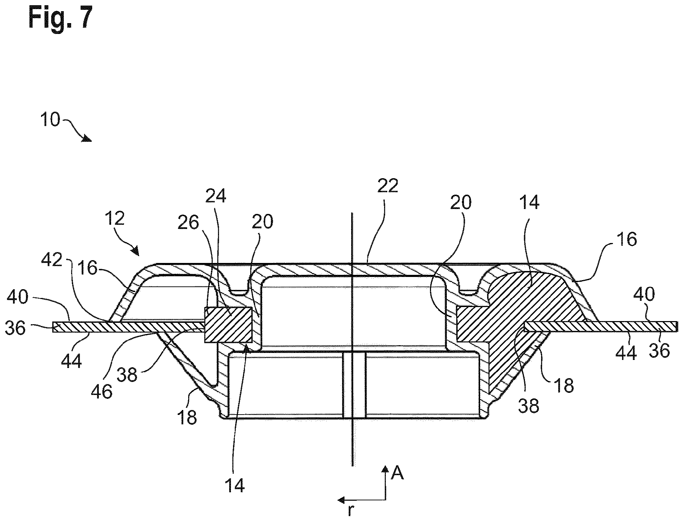

Nachdem die Rastlippe 18 den Rand der Öffnung 34 passiert hat, hintergreift sie diesen auf einer Rückseite 40 des Bauteils 36 (siehe Figuren 4 und 7). Dabei löst sich die Rastlippe 18 wieder von den Lamellen 26, und diese entspannen sich aufgrund ihrer Eigenelastizität so weit, bis die freien radialen Enden 28 der Lamellen 26 am Innenrand 38 der Öffnung 34 in Anlage kommen. Auf diese Weise wird der Dichtstopfen 10 in der Öffnung 34 zentriert.

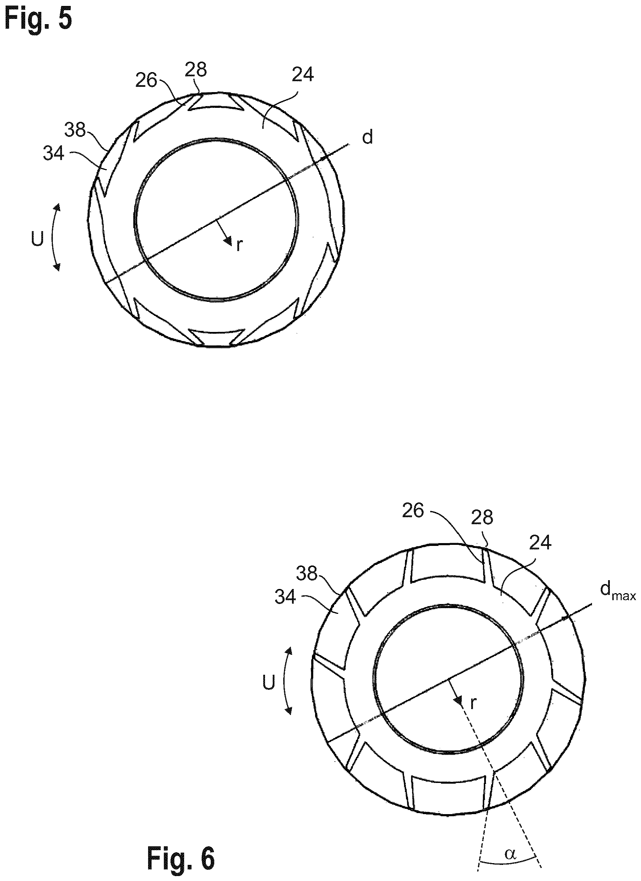

Der Dichtstopfen 10 ist für die Verwendung in Öffnungen 34 mit unterschiedlichen Durchmessern d zwischen einem minimalen Durchmesser und einem maximalen Durchmesser dₘₐₓ ausgelegt. Je nach Größe des Durchmessers d verformen sich die Lamellen 26 in Umfangsrichtung U mehr oder weniger. Figur 5 zeigt dabei die Situation in einer Öffnung 34 nahe dem minimalen Durchmesser, wo die Lamellen 26 in einem nahezu maximalen Winkel zur Radialrichtung r umgeklappt sind, während Figur 6 die Situation in einer Öffnung 34 mit einem maximalen Durchmesser dₘₐₓ zeigt, wo die Lamellen 26 fast in ihrem unbelasteten Zustand sind. Im Prinzip können bei einer Öffnung mit minimalem Durchmesser die Lamellen 26 flächig am Außenumfang des Ringabschnitts 24 anliegen, es wird aber eine bessere Zentrierwirkung erreicht, wenn die Lamellen 26 noch etwas Spiel haben.

Der Durchmesser d der Öffnung 34 ist dabei natürlich stets größer gewählt als der Außendurchmesser des Ringabschnitts 24 und kleiner als ein durch die freien radialen Enden 28 der Lamellen 26 beschriebener Durchmesser dₘₐₓ (siehe auch Figuren 5 und 6).

Beispielsweise können so Öffnungsdurchmesser d von etwa 30 - 35 mm abgedeckt werden, wobei die Länge der Lamellen 26, gemessen entlang ihrer Erstreckung ausgehend vom Umfang des Ringabschnitts 24 etwa 3 - 5 mm betragen kann.

In der vormontierten Position, in der die Rastlippe 18 die Rückseite 40 des Bauteils 36 hintergreift, liegt der radial äußere Rand 42 der Stützlippe 16 auf einer Vorderseite 44 des Bauteils 36 auf, während ein radial äußerer Rand 46 der Rastlippe 30 an der Rückseite 40 des Bauteils 36 anliegt.

Nachdem der Dichtstopfen 10 in der in den Figuren 4 und auf der linken Seite von Figur 7 gezeigten Position in der Öffnung 34 verrastet wurde und die Lamellen 26 in Anlage an den Innenrand 38 der Öffnung 34 sind, wird das Bauteil 36 zusammen mit dem eingesetzten Dichtstopfen 10 erwärmt. Hierbei dehnt sich das Material des Dichtkörpers 14 aus. Die Materialmenge des Dichtkörpers 14 ist so bemessen, dass der von der Umfangswand 20, der Stützlippe 16 und der Rastlippe 18 umschlossene Raum vollständig durch das nun expandierende Dichtmaterial ausgefüllt wird.

Auf diese Weise ist der gesamte Rand der Öffnung 34, sowohl der Innenrand der Öffnung als auch die radial daran anschließenden Bereiche der Rückseite 40 und der Vorderseite 44, vollständig und umfangsmäßig umlaufend von Dichtmaterial bedeckt. Innerhalb des so vom Grundkörper 12 des Dichtstopfens 10 umschlossenen Raums bleiben vorzugsweise keine Hohlräume bestehen, um ein Auskondensieren von Wasserdampf und einen Kontakt von Wasser mit dem Bauteil 36 im Bereich des Dichtstopfens 10 zu vermeiden.

In einer nicht dargestellten Ausführungsform weist der Dichtkörper des Dichtstopfens keine biegsamen, nach außen abstehenden Lamellen auf, sondern hat insbesondere eine glatte Außenkontur. Die Außenkontur könnte auch beispielsweise gerippt oder genoppt ausgebildet sein, aber auch konisch verlaufen, um auch hier eine Anpassung an unterschiedliche Öffnungsdurchmesser zu ermöglichen. Auch hier ist jedoch nach dem Erhitzen des Dichtstopfens der gesamte Rand der Öffnung 34, sowohl der Innenrand der Öffnung als auch die radial daran anschließenden Bereiche der Rückseite 40 und der Vorderseite 44, vollständig und umfangsmäßig umlaufend von Dichtmaterial bedeckt.

Durch die Einbettung des Randes der Öffnung 34 in das Dichtmaterial lassen sich sehr hohe Auszugskräfte von beispielsweise > 400 N und eine hohe Wasserdichte, beispielsweise eine Dichtigkeit, die einer Dichtigkeit in einer Wassertiefe von 1 m für eine Stunde entspricht, erzielen.

## Patentansprüche

1. Dichtstopfen zum Verschließen einer Öffnung (34) in einem Bauteil (36), insbesondere einem Karosseriebauteil eines Kraftfahrzeugs, mit einem Grundkörper (12), der so ausgebildet ist, dass er die Öffnung (34) abdecken und einen Rand der Öffnung (34) hintergreifen kann, **dadurch gekennzeichnet, dass** am Grundkörper (12) ein Dichtkörper (14) angeordnet ist, der einen Ringabschnitt (24) und mehrere vom Ringabschnitt (24) abstehende, in Umfangsrichtung (U) flexible Lamellen (26) mit freien radialen Enden (28) aufweist, wobei der Dichtkörper (14) aus einem bei Wärmeeinwirkung expandierenden Material besteht.

2. Dichtstopfen nach Anspruch 1, **dadurch gekennzeichnet, dass** der Grundkörper (12) eine umlaufende Stützlippe (16) und eine umlaufende Rastlippe (18) zur Anlage an einer Vorderseite (44) und einer Rückseite (40) des Bauteils (36) aufweist und dass der Dichtkörper (14) zwischen der Stützlippe (16) und der Rastlippe (18) aufgenommen ist.

3. Dichtstopfen nach einem der vorhergehenden Ansprüche, **dadurch gekennzeichnet, dass** der Grundkörper (12) eine umlaufende Umfangswand (20) aufweist und der Dichtkörper (14) radial außen an der Umfangswand (20) anliegt.

4. Dichtstopfen nach einem der Ansprüche 2 und 3, **dadurch gekennzeichnet, dass** die Lamellen (26) an ihren freien radialen Enden (28) am rastlippenseitigen axialen Ende (30) abgeschrägt sind.

5. Dichtstopfen nach einem der vorhergehenden Ansprüche, **dadurch gekennzeichnet, dass** die Lamellen (26) unbelastet in einem Winkel von 0 - 40°, insbesondere ca. 30°, zur Radialrichtung (r) ausgerichtet sind.

6. Dichtstopfen nach einem der vorhergehenden Ansprüche, **dadurch gekennzeichnet, dass** der Grundkörper (12) einstückig aus einem elastischen, aber formstabilen Material ausgebildet ist.

7. Dichtstopfen nach einem der vorhergehenden Ansprüche, **dadurch gekennzeichnet, dass** der Dichtkörper (14) zusammen mit dem Grundkörper (12) in einem Zweikomponenten-Spritzgussverfahren gefertigt ist.

8. Baugruppe mit einem Dichtstopfen (10) nach einem der vorhergehenden Ansprüche und mit einem Bauteil (36) mit einer Öffnung (34), in die der Dichtstopfen (10) eingesetzt ist, wobei nach Erhitzen des Dichtstopfens (10) das bei Wärmeeinwirkung expandierende Material des Dichtkörpers (14) den Innenrand (38) der Öffnung (34) sowie radial anschließende Bereiche der Vorderseite (44) und der Rückseite (40) des Bauteils (36) über den gesamten Umfang der Öffnung (34) umschließt.

9. Verfahren zum Abdichten einer Öffnung (34) in einem Bauteil (36), **dadurch gekennzeichnet, dass** ein Dichtstopfen (10) nach einem der Ansprüche 1 bis 7, der eine frontseitige Stützlippe (16) sowie eine rückseitige Rastlippe (18) aufweist, in die Öffnung (34) des Bauteils (36) eingeschoben wird, sodass die rückseitige Rastlippe (18) den Rand der Öffnung (34) hintergreift, wobei die Lamellen (26) des Dichtkörpers (14) in Umfangsrichtung (U) verformt werden und den Dichtstopfen (10) in der Öffnung (34) zentrieren, und dass das Bauteil (36) erhitzt wird, wobei sich ein bei Hitzeeinwirkung expandierendes Material des Dichtkörpers (14) ausdehnt und den Innenrand (38) der Öffnung (34) sowie radial anschließende Bereiche der Vorderseite (44) und der Rückseite (40) des Bauteils (36) über den gesamten Umfang der Öffnung (34) umschließt sowie den zwischen der Stützlippe (16), der Rastlippe (18) und dem Bauteil (36) gebildeten Raum vollständig ausfüllt.

## Claims

1. Sealing stopper for closing an opening (34) in a component (36), in particular in a body component of a motor vehicle, with a basic body (12) which is designed in such a manner that it can cover the opening (34) and can grip behind an edge of the opening (34), **characterized in that** a sealing body (14) is arranged on the basic body (12), the sealing body having a ring portion (24) and a plurality of lamellae (26) which protrude from the ring portion (24), are flexible in the circumferential direction (U) and have free radial ends (28), wherein the sealing body (14) is composed of a material which expands upon the action of heat.

2. Sealing stopper according to Claim 1, **characterized in that** the basic body (12) has an encircling supporting lip (16) and an encircling latching lip (18) for butting against a front side (44) and a rear side (40) of the component (36), and **in that** the sealing body (14) is accommodated between the support lip (16) and the latching lip (18).

3. Sealing stopper according to either of the preceding claims, **characterized in that** the basic body (12) has an encircling circumferential wall (20), and the sealing body (14) lies radially on the outside against the circumferential wall (20).

4. Sealing stopper according to either of Claims 2 and 3, **characterized in that** the lamellae (26) are bevelled at their free radial ends (28) at the latching-lip-side axial end (30).

5. Sealing stopper according to one of the preceding claims, **characterized in that** the lamellae (26) in unloaded form are oriented at an angle of 0-40°, in particular approx. 30°, with respect to the radial direction (r).

6. Sealing stopper according to one of the preceding claims, **characterized in that** the basic body (12) is formed in one piece from an elastic, but dimensionally stable material.

7. Sealing stopper according to one of the preceding claims, **characterized in that** the sealing body (14) is manufactured together with the basic body (12) in a two-component injection-moulding process.

8. Assembly with a sealing stopper (10) according to one of the preceding claims and with a component (36) having an opening (34) into which the sealing stopper (10) is inserted, wherein, after heating of the sealing stopper (10), the material of the sealing body (14) that expands under the action of heat surrounds the inner edge (38) of the opening (34) and radially adjoining regions of the front side (44) and of the rear side (40) of the component (36) over the entire extent of the opening (34).

9. Method for sealing an opening (34) in a component (36), **characterized in that** a sealing stopper (10) according to one of Claims 1 to 7, which has a front-side support lip (16) and a rear-side latching lip (18), is pushed into the opening (34) of the component (36) such that the rear-side latching lip (18) grips behind the edge of the opening (34), wherein the lamellae (26) of the sealing body (14) are deformed in the circumferential direction (U) and centre the sealing stopper (10) in the opening (34), and **in that** the component (36) is heated, wherein a material of the sealing body (14) that expands under the action of heat expands and surrounds the inner edge (38) of the opening (34) and radially adjoining regions of the front side (44) and of the rear side (40) of the component (36) over the entire extent of the opening (34) and completely fills the space formed between the support lip (16), the latching lip (18) and the component (36).

## Revendications

1. Bouchon étanche pour la fermeture d'une ouverture (34) dans un composant (36), en particulier un composant de carrosserie d'un véhicule automobile, avec un corps de base (12), qui est configuré de telle manière qu'il puisse recouvrir l'ouverture (34) et s'accrocher à un bord de l'ouverture (34), **caractérisé en ce qu'**un corps d'étanchéité (14) est disposé sur le corps de base (12), et présente une partie annulaire (24) et plusieurs lamelles (26) saillantes sur la partie annulaire (24) et flexibles dans la direction périphérique (U) avec des extrémités radiales libres (28), dans lequel le corps d'étanchéité (14) est composé d'un matériau qui se dilate sous l'effet de la chaleur.

2. Bouchon étanche selon la revendication 1, **caractérisé en ce que** le corps de base (12) présente une lèvre d'appui périphérique (16) et une lèvre d'encliquetage périphérique (18) à appliquer sur un côté avant (44) et un côté arrière (40) du composant (36) et **en ce que** le corps d'étanchéité (14) est logé entre la lèvre d'appui (16) et la lèvre d'encliquetage (18).

3. Bouchon étanche selon l'une quelconque des revendications précédentes, **caractérisé en ce que** le corps de base (12) présente une paroi périphérique circulaire (20) et le corps d'étanchéité (14) est situé radialement à l'extérieur sur la paroi périphérique (20).

4. Bouchon étanche selon une des revendications 2 et 3, **caractérisé en ce que** les lamelles (26) sont chanfreinées à leurs extrémités radiales libres (28) sur l'extrémité axiale côté lèvre d'encliquetage (30).

5. Bouchon étanche selon l'une quelconque des revendications précédentes, **caractérisé en ce que** les lamelles (26) sont orientées, à l'état non chargé, sous un angle de 0 - 40°, en particulier d'environ 30°, par rapport à la direction radiale (r).

6. Bouchon étanche selon l'une quelconque des revendications précédentes, **caractérisé en ce que** le corps de base (12) est réalisé en une seule pièce en un matériau élastique mais de forme stable.

7. Bouchon étanche selon l'une quelconque des revendications précédentes, **caractérisé en ce que** le corps d'étanchéité (14) est fabriqué en même temps que le corps de base (12) par un procédé de moulage par injection à deux composants.

8. Ensemble de construction avec un bouchon étanche (10) selon l'une quelconque des revendications précédentes et avec un composant (36) présentant une ouverture (34), dans laquelle le bouchon étanche (10) est inséré, dans lequel, après le chauffage du bouchon étanche (10), le matériau du corps d'étanchéité (14) qui se dilate sous l'effet de la chaleur entoure le bord intérieur (38) de l'ouverture (34) ainsi que des zones radialement adjacentes du côté avant (44) et du côté arrière (40) du composant (36) sur tout le pourtour de l'ouverture (34).

9. Procédé pour étanchéifier une ouverture (34) dans un composant (36), **caractérisé en ce que** l'on insère un bouchon étanche (10) selon l'une quelconque des revendications 1 à 7, qui présente une lèvre d'appui côté avant (16) ainsi qu'une lèvre d'encliquetage côté arrière (18), dans l'ouverture (34) du composant (36), de telle manière que la lèvre d'encliquetage côté arrière (18) accroche le bord de l'ouverture (34), dans lequel les lamelles (26) du corps d'étanchéité (14) sont déformées en direction périphérique (U) et centrent le bouchon étanche (10) dans l'ouverture (34), et **en ce que** l'on chauffe le composant (36), dans lequel un matériau du corps d'étanchéité (14) qui se dilate sous l'effet de la chaleur s'étend et entoure le bord intérieur (38) de l'ouverture (34) ainsi que des zones radialement adjacentes du côté avant (44) et du côté arrière (40) du composant (36) sur tout le pourtour de l'ouverture (34) et remplit entièrement l'espace formé entre la lèvre d'appui (16), la lèvre d'encliquetage (18) et le composant (36).
